# EUROPÄISCHE PATENTSCHRIFT

(11) **EP 4 468 547 B1**
(45) Veröffentlichungstag und Bekanntmachung des Hinweises auf die Patenterteilung: **18.02.2026**
(21) Anmeldenummer: 23020252.5
(22) Anmeldetag: 25.05.2023
(51) Int. Cl.: H02J 3/28, H02J 15/00

(54) **ENERGIEVERSORGUNGSSYSTEM FÜR GEBÄUDE**
ENERGY SUPPLY SYSTEM FOR BUILDINGS
SYSTÈME D'ALIMENTATION EN ÉNERGIE POUR BÂTIMENTS

(43) Veröffentlichungstag der Anmeldung: 27.11.2024
(73) Patentinhaber: Energie-Studio Höfer GmbH, 2880 Kirchberg am Wechsel (AT)
(72) Erfinder: HÖFER, Andreas, A-2880 Kirchberg am Wechsel (AT); HÖFER, Dominik, A-2880 Kirchberg am Wechsel (AT); HÖFER, Fabian, A-2880 Kirchberg am Wechsel (AT)
(74) Vertreter: SONN Patentanwälte GmbH & Co KG

(56) Entgegenhaltungen:
- DE-A1- 102021 104 036
- DE-U1- 202017 006 617
- DE-U1- 202022 105 518
- US-A1- 2009 048 716
- ABDIN Z ET AL: "Solar hydrogen hybrid energy systems for off-grid electricity supply: A critical review", RENEWABLE AND SUSTAINABLE ENERGY REVIEWS, ELSEVIERS SCIENCE, NEW YORK, NY, US, vol. 52, 2 September 2015 (2015-09-02), pages 1791 - 1808, XP029341601, ISSN: 1364-0321, DOI: 10.1016/J.RSER.2015.08.011

## Beschreibung

Die Erfindung betrifft ein Energieversorgungssystem für Gebäude, umfassend:
- wenigstens eine elektrische Energiequelle, die zur Abgabe von elektrischer Energie ausgebildet ist,
- wenigstens eine Wärmequelle, die zur Abgabe von thermischer Energie ausgebildet ist,
- wenigsten einen elektrischen Verbraucher,
- wenigstens einen Wärmeverbraucher,
- ein Energiespeichersystem, dem elektrische Energie von der wenigstens einen elektrischen Energiequelle und Wärme von der wenigstens einen Wärmequelle zuführbar ist und von dem elektrische Energie an den wenigsten einen elektrischen Verbraucher und Wärme an den wenigstens einen Wärmeverbraucher abgebbar ist.

Herkömmliche Energieversorgungssysteme für Gebäude beruhen häufig auf separaten, untereinander nicht abgestimmten Energiequellen sowie Speicher- und Steuerungssystemen für elektrische und thermische Energie. Diese Systeme haben in der Regel eine begrenzte Effizienz und Flexibilität, was zu höheren Energiekosten führen und zu Treibhausgasemissionen beitragen kann. Darüber hinaus weisen diese Systeme häufig mehrere Nachteile auf, die ihre Leistungsfähigkeit und Praktikabilität beeinträchtigen, wie im Folgenden erläutert wird.

Erstens sind herkömmliche elektrische Energieversorgungssysteme, wie Netzanschlüsse, Solarzellen und Windgeneratoren, in der Regel unabhängig von thermischen Energieversorgungssystemen, wie Erdgas, Heizöl oder Biomasse. Diese fehlende Integration zwischen den elektrischen und thermischen Energieversorgungssystemen kann zu Energieverschwendung führen, da überschüssige elektrische Energie im Netz verloren geht, während überschüssige thermische Energie möglicherweise ungenutzt verpufft.

Zweitens sind Energiespeichersysteme in konventionellen Energieversorgungssystemen für Gebäude oft nur für die Speicherung einer Energieart ausgelegt, entweder für elektrische oder thermische Energie. So speichern beispielsweise Batterien in der Regel elektrische Energie, während Warmwasserspeicher thermische Energie speichern. Diese Trennung kann zu Ineffizienzen führen, da es keine direkte Möglichkeit gibt, überschüssige elektrische Energie in thermische Energie umzuwandeln und zu speichern oder umgekehrt.

Außerdem wird Wasserstoff in herkömmlichen Energieversorgungssystemen nur begrenzt oder gar nicht als Energieträger eingesetzt. Wasserstoff hat das Potenzial, als flexibler Energiespeicher mit hoher Kapazität zu dienen, der eine effiziente Energieumwandlung und -speicherung zwischen elektrischen und thermischen Formen ermöglicht. Herkömmliche Systeme nutzen dieses Potenzial jedoch nicht und lassen somit die Vorteile der Wasserstoffspeichertechnologie ungenutzt.

Herkömmliche Systeme sind in der Regel auch nicht in der Lage, die bei verschiedenen Energieumwandlungsprozessen entstehende Abwärme zurückzugewinnen und zu nutzen. So bleibt beispielsweise die Abwärme von elektrischen Geräten, der Wasserstoffproduktion oder von Brennstoffzellen oft ungenutzt, was zu weiteren Ineffizienzen und Energieverlusten führt.

Schließlich verfügen viele herkömmliche Energieversorgungssysteme für Gebäude nicht über fortschrittliche Steuerungs- und Managementsysteme, die den Einsatz der verschiedenen Energiequellen, Speicher und Verbraucher optimieren könnten. Solche Systeme könnten eine effizientere Nutzung der verfügbaren Energieressourcen ermöglichen, sich an den wechselnden Energiebedarf anpassen und die Gesamtenergieeffizienz von Gebäuden verbessern.

Die US2009/048716A offenbart ein Energiespeichersystem gemäß des Oberbegriffs des unabhängigen Anspruchs 1.

Angesichts dieser Nachteile besteht ein Bedarf an einem effizienteren und integrierten Energiespeicher- und -versorgungssystem, das die Nutzung der verfügbaren Energieressourcen optimieren, Abwärme zurückgewinnen und nutzen, Wasserstoff als Energieträger einbeziehen und die Gesamtenergieeffizienz von Gebäuden verbessern kann.

Die Aspekte der Erfindung werden im Gegegnstand des unabhängigen Anspruchs 1 offenbart. Zur Lösung der Aufgabe sieht die Erfindung bei einem Energieversorgungssystem der eingangs genannten Art im Wesentlichen vor, dass das Energiespeichersystem einen Wärmespeicher, einen elektrischen Energiespeicher und einen Wasserstoffspeicher, insbesondere einen chemischen Wasserstoffspeicher mit einem Trägerstoff aufweist, der mit Wasserstoff beladbar und von dem Wasserstoff freisetzbar ist, wobei eine Einrichtung zur Erzeugung von Wasserstoff unter Verwendung von elektrischer Energie aus der wenigstens einen elektrischen Energiequelle und/oder dem elektrischen Energiespeicher vorgesehen ist, von welcher der Wasserstoff dem Wasserstoffspeicher zuführbar ist, und wobei eine Einrichtung zur Verbrennung von Wasserstoff unter Abgabe von elektrischer Energie an den elektrischen Speicher und/oder den wenigsten einen elektrischen Verbraucher vorgesehen ist, welcher der aus dem Wasserstoffspeicher freigesetzte Wasserstoff zuführbar ist.

Die Integration eines Wärmespeichers, eines elektrischen Energiespeichers und eines Wasserstoffspeichers, insbesondere chemischen Wasserstoffspeichers, zwischen wenigstens einer elektrischen Energiequelle und wenigstens einer Wärmequelle auf der einen Seite und wenigstens einem elektrischen Verbraucher und wenigstens einem Wärmeverbraucher auf der anderen Seite bietet mehrere wesentliche Vorteile, die im Folgenden erläutert werden.

Durch die Einbindung von Wärme-, Strom- und chemischen Wasserstoffspeichern in ein einheitliches System kann die Gesamtenergieeffizienz erheblich verbessert werden. Überschüssige elektrische Energie kann im elektrischen Energiespeicher gespeichert werden, während überschüssige Wärmeenergie im Wärmespeicher gespeichert werden kann. Darüber hinaus kann elektrische Energie in Wasserstoff umgewandelt und im chemischen Wasserstoffspeicher gespeichert werden, was ein hocheffizientes Mittel zur Speicherung und Nutzung von Energie in verschiedenen Formen darstellt. Dieser integrierte Ansatz minimiert die Energieverschwendung und optimiert die Nutzung der verfügbaren Ressourcen.

Ein derartiges integriertes System mit mehreren Speichern kann sich besser an den schwankenden Energiebedarf und die Versorgungsbedingungen anpassen. Das System kann den Energiefluss zwischen den Strom-, Wärme- und Wasserstoffspeichern intelligent steuern und so sicherstellen, dass die Energie immer verfügbar ist, um den Bedarf der Strom- und Wärmeverbraucher zu decken. Diese Anpassungsfähigkeit steigert die Gesamtleistung und Zuverlässigkeit des Stromversorgungssystems.

Das integrierte System kann Abwärme, die bei verschiedenen Energieumwandlungsprozessen wie der Wasserstoffproduktion, der Wasserstoffverbrennung oder der Stromerzeugung entsteht, effektiv zurückgewinnen und nutzen. Diese Abwärme kann in den Wärmespeicher eingespeist werden, der dann bei Bedarf Wärme an den Wärmeverbraucher liefern kann, was die Energieeffizienz des Systems weiter verbessert und die Treibhausgasemissionen reduziert.

Das integrierte System kann effektiv mit erneuerbaren Energiequellen wie Sonnenkollektoren und Windturbinen zusammenarbeiten, um eine stabile und nachhaltige Energieversorgung zu gewährleisten. Das System kann überschüssige elektrische Energie, die von diesen Quellen erzeugt wird, in den elektrischen- oder Wasserstoffspeichern speichern und diese gespeicherte Energie nutzen, wenn die erneuerbaren Energiequellen nicht genügend Strom erzeugen. Diese synergetische Beziehung zwischen dem integrierten Speichersystem und den erneuerbaren Energiequellen kann die Abhängigkeit von fossilen Brennstoffen verringern und zu einer grüneren, nachhaltigeren Energieinfrastruktur beitragen.

Durch die optimale Nutzung der verfügbaren Energieressourcen und die Minimierung der Energieverschwendung kann das integrierte System zur Senkung der Energiekosten für Gebäudeeigentümer und -nutzer beitragen. Darüber hinaus kann die effiziente Nutzung von Energieressourcen und die Rückgewinnung von Abwärme die Treibhausgasemissionen reduzieren und zu einer geringeren Umweltbelastung beitragen.

Gemäß einer bevorzugten Ausbildung der Erfindung kann vorgesehen sein, dass die Einrichtung zur Erzeugung von Wasserstoff wenigstens einen Elektrolyseur umfasst und dass die Einrichtung zur Verbrennung von Wasserstoff wenigstens eine Brennstoffzelle umfasst.

Ein Elektrolyseur ist eine Vorrichtung, die durch den Prozess der Elektrolyse Wasser in seine Bestandteile Wasserstoff und Sauerstoff aufspaltet, indem es mit elektrischem Strom durchflossen wird. Wenn im integrierten Stromversorgungssystem überschüssige elektrische Energie von der elektrischen Energiequelle (z.B. PV-anlage, Windturbinen oder Netzanschluss) oder dem elektrischen Energiespeicher verfügbar ist, kann diese Energie zum Elektrolyseur geleitet werden.

Bei der Elektrolyse werden die Wassermoleküle an den jeweiligen Elektroden (Kathode und Anode) im Elektrolyseur in Wasserstoff und Sauerstoff gespalten. Das dabei entstehende Wasserstoffgas wird anschließend aufgefangen und in den chemischen Wasserstoffspeicher geleitet.

Der chemische Wasserstoffspeicher kann Wasserstoff mit verschiedenen Methoden speichern, z.B. mit Metallhydriden oder Adsorptionsspeichern. Bei der Metallhydridspeicherung werden Wasserstoffmoleküle in einem festen Metall oder einer Metalllegierung absorbiert, wodurch Metallhydride entstehen. Bei der Adsorptionsspeicherung werden die Wasserstoffmoleküle an der Oberfläche eines porösen Materials wie Aktivkohle oder einem metallorganischen Gerüst adsorbiert.

Der vom Elektrolyseur erzeugte Wasserstoff wird dem chemischen Wasserstoffspeicher zugeführt, wo er mit einer dieser Methoden gespeichert wird. Dies ermöglicht eine sichere und effiziente Speicherung von Wasserstoff mit hoher Kapazität, der bei Bedarf zur Energieerzeugung freigegeben werden kann.

Wenn ein elektrischer Verbraucher elektrische Energie benötigt, kann der Wasserstoff aus dem chemischen Wasserstoffspeicher freigesetzt und einer oder mehreren Brennstoffzellen zugeführt werden. Eine Brennstoffzelle ist ein elektrochemisches Gerät, das die im Wasserstoff gespeicherte chemische Energie durch eine umgekehrte Elektrolyse direkt in elektrische Energie und Wärme umwandelt.

In einer Brennstoffzelle verbindet sich der Wasserstoff an der Anode mit dem Sauerstoff aus der Luft, wobei Wasser gebildet und Elektronen freigesetzt werden. Diese Elektronen fließen durch einen externen Stromkreis und erzeugen elektrische Energie, die an den Verbraucher abgegeben oder in einem elektrischen Energiespeicher gespeichert werden kann. Die bei diesem Prozess entstehende Wärme kann dem Wärmespeicher zugeführt und genutzt werden, was die Gesamtenergieeffizienz des Systems weiter verbessert.

Bei der Stoffumwandlung im Elektrolyseur entstehen ca. 50% der eingebrachten Energie als Abwärme, was bei einer Hin- und Rückwandlung einem Wirkungsgrad von ca. 25% entspricht. Um nun den Wirkungsgrad der Vorrichtung wesentlich anzuheben, sieht die Erfindung vor, dass Abwärme aus der Einrichtung zur Erzeugung von Wasserstoff und/oder aus der Einrichtung zur Verbrennung von Wasserstoff und/oder aus dem chemischen Wasserstoffspeicher dem Wärmespeicher zuführbar ist. Weiters ist erfindungsgemäß dem chemischen Wasserstoffspeicher zur Freisetzung des Wasserstoffs Wärme aus dem Wärmespeicher zuführbar. Dadurch kann die zuvor in den Wärmespeicher geleitete Abwärme z.B. aus dem Elektrolyseprozess oder aus der Einlagerung des Wasserstoffs in den chemischen Wasserstoffspeicher für das Austreiben des Wasserstoffs aus dem Metallhydridspeicher genutzt werden.

Ein Metallhydridspeicher speichert Wasserstoff durch die Bildung chemischer Bindungen zwischen Wasserstoffmolekülen und Metall oder Metalllegierungen. Metallhydride werden gebildet, wenn Wasserstoffmoleküle mit den Metallen oder Metalllegierungen im Speicher reagieren. Die Wasserstoffmoleküle werden in die Metallgitterstruktur absorbiert und bilden Metall-Wasserstoff-Bindungen. Dieser Prozess ist exotherm, d.h. er setzt bei der Bildung der chemischen Bindungen Wärme frei.

Um Wasserstoff aus dem Metallhydridspeicher freizusetzen, muss Wärme zugeführt werden. Die Wärme erhöht die kinetische Energie der Wasserstoffatome, wodurch die Metall-Wasserstoff-Bindungen geschwächt werden. Die zur Freisetzung von Wasserstoff erforderliche Wärmemenge hängt vom jeweiligen Metallhydridmaterial und der Stärke der Metall-Wasserstoff-Bindungen ab. Der Prozess der Wasserstofffreisetzung aus Metallhydriden wird auch durch den Druck beeinflusst. In einigen Fällen kann eine Erhöhung des Drucks in der Speichereinheit die Wasserstofffreisetzung fördern, indem zusätzliche Energie zur Überwindung der Metall-WasserstoffBindung bereitgestellt wird. Die Wirkung des Drucks hängt jedoch von dem jeweiligen Metallhydridmaterial und seinen Druck-Temperatur-Gleichgewichtseigenschaften ab.

Hinsichtlich des elektrischen Energiespeichers sieht eine bevorzugte Ausbildung der Erfindung vor, dass dieser als elektrochemischer Speicher, insbesondere als Akkumulator, wie z.B. als Lithium-Ionen- oder Natrium-Ionen-Akkumulator oder Feststoffakkumulator, insbesondere Lithium-Eisenphosphat-Akkumulator ausgebildet ist. Alternativ oder zusätzlich kann der elektrische Energiespeicher auch wenigstens eine Tertiärzelle aufweisen.

Der elektrische Energiespeicher ist vorzugsweise zwischen die Einrichtung zur Verbrennung von Sauerstoff und den wenigstens einen elektrischen Verbraucher geschaltet, um hierdurch eine Pufferung zu erreichen.

Der Wärmespeicher ist vorzugsweise als sensibler Wärmespeicher, thermochemischer Wärmespeicher und/oder Latentwärmespeicher ausgebildet.

Eine besonders vorteilhafte Integration des Wärmespeichers in das mit Energie zu versorgende Gebäude gelingt dadurch, dass der sensible Wärmespeicher wenigstens ein Betonelement aufweist, das durch insbesondere mäanderförmig hindurchgeführte Rohrleitungen zur Durchleitung eines flüssigen Wärmeträgermediums, insbesondere Wasser, thermisch aktivierbar ist.

Der Vorteil der Verwendung eines Betonelements als Wärmespeicher liegt darin begründet, dass Beton ein hohes Wärmespeichervermögen aufweist. Beton ist außerdem ein leicht verfügbares und relativ kostengünstiges Material. Die Verwendung von Beton als Hauptbestandteil eines sensiblen Wärmespeichers trägt zur Senkung der Bau- und Wartungskosten bei und macht das gesamte Energieversorgungssystem erschwinglicher und wirtschaftlich tragfähig.

Das mäanderförmige Rohrleitungsdesign vergrößert die Kontaktfläche zwischen dem flüssigen Wärmeträgermedium (z.B. Wasser) und dem Betonelement, wodurch eine effiziente Wärmeübertragung erreicht wird. Diese verbesserte Wärmeübertragung stellt sicher, dass die im Beton gespeicherte thermische Energie effektiv an das Wärmeträgermedium übertragen wird, was eine effizientere Wärmeabgabe an die Wärmeverbraucher ermöglicht.

Schließlich ist Beton ein robustes und langlebiges Material, das rauen Umweltbedingungen standhält und seine Leistung über lange Zeiträume beibehält. Diese Langlebigkeit stellt sicher, dass der sensible Wärmespeicher über einen längeren Zeitraum eine zuverlässige und konsistente thermische Energiespeicherung bieten kann, was die Kosten für Wartung und Austausch reduziert.

Das Betonelement kann in besonders bevorzugter Weise in den Unterbau eines Gebäudes integriert oder im Erdreich angeordnet werden. Durch die Ausbildung eines solchen im Gebäude oder Grundstück integrierten sensiblen Wärmespeichers kann der bisher thermisch ungenützte Unterbau, wie z.B. die Frostschürze, die Rollierung oder die Sauberkeitsschicht bei Neubauten energetisch genutzt werden. Bei Bestandsbauten, Gebäuden mit Untergeschossen oder dem Antreffen von Grundwasser, kann der Wärmespeicher als externes mineralisches Speichermedium im Erdreich z.B. unter Parkplätzen, Grünflächen und dgl. platziert werden. Der Wärmespeicher wird vorzugsweise durch ein Rohrleitungssystem thermisch aktiviert und allseitig mit einer Wärmedämmung umschlossen, was einen Langzeitspeicher-Effekt gewährleistet.

Hinsichtlich der Energiequellen sind im Rahmen der vorliegenden Erfindung emissionsfreie Quellen zu bevorzugen. Die wenigstens eine elektrische Energiequelle kann beispielsweise photovoltaische Zellen und/oder wenigstens einen Windgenerator umfassen. Weiters ist eine Wasserkraftanlage denkbar. Die wenigstens eine Wärmequelle kann eine Biomasseheizung oder ein Biomasseheizkraftwerk umfassen.

Hinsichtlich der im Rahmen des erfindungsgemäßen Energieversorgungssystems vorhandenen Wärmequellen und/oder Wärmespeicher besteht das Risiko, dass diese saisonabhängig nicht immer das für die Beheizung des Gebäudes erforderliche Temperaturniveau bereitstellen. Um diesem Umstand abzuhelfen, sieht eine bevorzugte Weiterbildung der Erfindung vor, dass das Energieversorgungssystem weiters eine Wärmepumpe umfasst, welche den wenigstens einen Wärmeverbraucher mit Wärme versorgt und die den Wärmespeicher und/oder Grundwasser als Wärmereservoir nutzt. Die Wärmepumpe ist eine Kraftwärmemaschine, die in der Lage ist, unter Verwendung von elektrischem Strom thermische Energie aus einem Medium mit niedrigerer Temperatur zu entnehmen und als Nutzwärme auf das zu beheizendes System mit höherer Temperatur zu übertragen. Als Wärmereservoir kann hierbei der Wärmespeicher und/oder Grundwasser dienen. Alternativ kann als Wärmereservoir auch Abwärme aus einer Gebäudeabluftwärmerückgewinnung oder latente Wärme eingesetzt werden.

Als Wärmeverbraucher kann eine Fußbodenheizung und/oder eine Beton- bzw. Baukernaktivierung vorgesehen sein, die in herkömmlicher Weise ein flächiges, im Fußbodenaufbau (Heizestrich) verlegtes Rohrleitungssystem zum Beheizen von Räumen umfassen.

Um auch eine Kühlung bereitstellen zu können, ist bevorzugt vorgesehen, dass das Energieversorgungssystem weiters eine Kühlvorrichtung zur Raumkühlung umfasst, welche an eine Wärmesenke, wie z.B. einen Grundwasserbrunnen anschließbar ist. Die Nutzung von Grundwasser für die Zwecke der Gebäudekühlung bringt eine hohe Energie-Effizienz. Ein Grundwasserbrunnen stellt eine Wärmesenke dar, die eine effizientere Wärmeabgabe des Kühlgeräts ermöglicht. Grundwasser hat in der Regel das ganze Jahr über eine stabile und relativ niedrige Temperatur, was es zu einem idealen Medium für den Wärmeaustausch macht. Diese effiziente Wärmeableitung führt zu einem geringeren Energieverbrauch und niedrigeren Betriebskosten für das Kühlsystem. Grundwasserbasierte Kühlsysteme haben zudem geringere Umweltauswirkungen als herkömmliche Klimaanlagen, die auf Kältemittel angewiesen sind, die zum Ozonabbau und zur globalen Erwärmung beitragen können. Durch die Nutzung eines Grundwasserbrunnens als Wärmesenke kann das Kühlgerät eine umweltfreundliche und nachhaltige Kühllösung bieten.

Kühlsysteme, die Grundwasserbrunnen als Wärmesenken nutzen, haben in der Regel weniger bewegliche Teile und erfordern weniger Wartung als herkömmliche Klimaanlagen. Dieser geringere Wartungsaufwand trägt zu niedrigeren Betriebskosten und höherer Systemzuverlässigkeit bei.

Bevorzugt ist hierbei vorgesehen, dass die Kühlvorrichtung Geschoßdecken des Gebäudes umfasst, die durch insbesondere mäanderförmig hindurchgeführte Rohrleitungen zur Durchleitung eines flüssigen Wärmeträgermediums, insbesondere Wasser, thermisch aktivierbar sind, und/oder Fußbodenheizungen, die zum Kühlen herangezogen werden.

Zusätzlich kann das erfindungsgemäße Energieversorgungssystem über eine Lüftungsanlage mit Wärmerückgewinnung für die Raumlüftung verfügen. Die Anlagenleitungen können hierbei zu großen Teilen in den Stahlbetondecken geführt werden. Dadurch kommt es zu einer Vortemperierung der gefassten Luft. Zudem wälzt die Lüftung die Raumluft um und verhindert somit einen Wärmestau an der Decke.

Die Erfindung wird nachfolgend anhand eines in der Zeichnung schematisch dargestellten Ausführungsbeispiels näher erläutert.

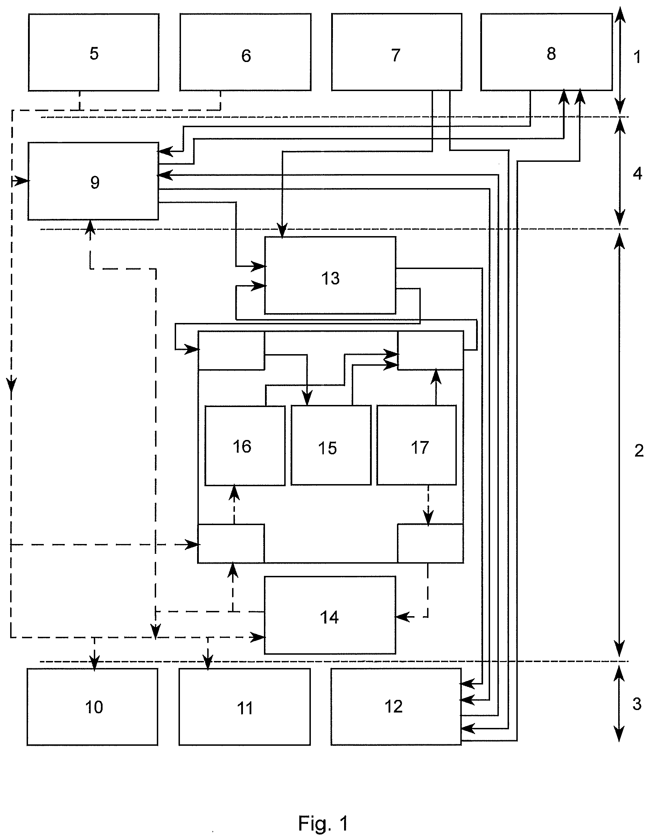

Figur 1 zeigt ein schematisches Diagramm der einzelnen Komponenten eines Energieversorgungssystems sowie die Energieflüsse zwischen den Komponenten.

Das Energieversorgungssystem kann in die folgenden vier Abschnitte unterteilt werden: Der Abschnitt 1 umfasst die Energieerzeuger oder -quellen, der Abschnitt 2 umfasst Energiespeicher und der Abschnitt 3 umfasst Energieverbraucher. Weiters ist ein Abschnitt 4 vorgesehen, der wenigstens ein Hilfsgerät umfasst.

Der Abschnitt 1 umfasst wenigstens eine elektrische Energiequelle, die zur Abgabe von elektrischer Energie ausgebildet ist, nämlich eine Netzstromversorgung 5 aus einem Stromnetz und eine Photovoltaikanlage 6, sowie wenigstens eine Wärmequelle, die zur Abgabe von thermischer Energie ausgebildet ist, nämlich eine Biomasseheizung 7 und einen Grundwasserbrunnen 8.

Der Abschnitt 3 umfasst wenigsten einen elektrischen Verbraucher, nämlich eine Netzeinspeisung 10 zur Rückführung von überschüssiger elektrischer Energie in das Stromnetz und lokale Stromverbraucher 11, sowie wenigstens einen Wärmeverbraucher 12.

Der Abschnitt 2 bildet das Energiespeichersystem, umfassend einen Wärmespeicher 13, einen elektrischen Energiespeicher 14 und einen chemischen Wasserstoffspeicher 15. Zur Erzeugung von Wasserstoff ist dem chemischen Wasserstoffspeicher 15 ein Elektrolyseur 16 zugeordnet und zur Verbrennung von Wasserstoff unter Abgabe von elektrischer Energie ist dem chemischen Wasserstoffspeicher 15 eine Brennstoffzelle 17 zugeordnet.

Die als Hilfsgerät fungierende Wärmepumpe ist mit 9 bezeichnet.

Die Wärmeflüsse zwischen den einzelnen Komponenten sind mit durchgezogenen Linien dargestellt und die elektrischen Energieflüsse sind mit strichlierten Linien dargestellt.

Elektrische Energie wird hauptsächlich aus der Netzstromversorgung 5 und der Photovoltaikanlage 6 bezogen und kann den Stromverbrauchern 11 direkt zugeführt werden. Der Strom aus der Netzstromversorgung 5 und der Photovoltaikanlage 6 wird weiters dazu verwendet, die Wärmepumpe 9 und den Elektrolyseur zu betreiben. Überschüssige elektrische Energie aus der Photovoltaikanlage 6 wird dem elektrischen Energiespeicher 14 zugeführt. Weiters kann auch Strom aus der Netzstromversorgung 5 dem elektrischen Energiespeicher 14 zugeführt werden, wenn dieser nicht ausreichend durch die Photovoltaikanlage 6 versorgt werden kann.

Der elektrische Energiespeicher 14 dient dazu, kurzfristige Stromversorgungslücken zu überbrücken und kann bei Bedarf die Stromverbraucher 11, die Wärmepumpe 9 und/oder den Elektrolyseur 16 versorgen. Weiters wird der von der Brennstoffzelle 17 erzeugte Strom dem elektrischen Energiespeicher 14 zugeführt.

Hinsichtlich der Wärmeflüsse ist vorgesehen, dass die Biomasseheizung 7 sowohl die Wärmeverbraucher 12 als auch den Wärmespeicher 13 mit Wärme versorgen kann. Die Wärmeverbraucher 12 können alternativ auch vom Wärmespeicher 13 Wärme erhalten. Eine weitere Möglichkeit zur Wärmeversorgung der Wärmeverbraucher 12 besteht in der Verwendung der Wärmepumpe 9. Die Wärmepumpe 9 nutzt hierbei den Grundwasserbrunnen 8 als Wärmereservoir und führt die dem Grundwasserbrunnen 8 entzogene Wärme den Wärmeverbrauchern 12 zu.

Zur Kühlung der "Wärmeverbraucher", wodurch diese zu negativen Wärmeverbrauchern werden, können diese die Wärme direkt an den Grundwasserbrunnen 8 abführen. Alternativ kann eine Kühlung über die Wärmepumpe 9 erfolgen, die ihrerseits den Grundwasserbrunnen 8 als Wärmereservoir nutzt, um die den Wärmeverbrauchern 12 entzogene Wärme dem Grundwasserbrunnen 8 zuzuführen.

Die Wärmepumpe 9 kann auch dazu genutzt werden, den Wärmespeicher 13 mit Wärme aufzuladen, wozu die Wärmepumpe 9 wieder den Grundwasserbrunnen 8 als Wärmereservoir nutzt und die dem Grundwasserbrunnen 8 entzogene Wärme dem Wärmespeicher 13 zuführt.

Überschüssige elektrische Energie, die langfristig gespeichert werden soll, kann in besonders effizienter Weise in Form von Wasserstoff im chemischen Wasserstoffspeicher 15 gespeichert werden. Die überschüssige elektrische Energie wird hierbei dem Elektrolyseur 16 zugeführt, der unter Abgabe von Wärme Wasserstoff erzeugt, der dem chemischen Wasserstoffspeicher 15, insbesondere einem Metallhydridspeicher, zugeführt wird. Die bei der Einlagerung des Wasserstoffs in den Metallhydridspeicher 15 ablaufende chemische Reaktion ist exotherm, sodass die vom Metallhydridspeicher 15 abgegebene Wärme im Wärmespeicher 13 gespeichert werden kann. Um den Wasserstoff bei Bedarf in elektrische Energie rückzuwandeln, wird der Wasserstoff aus dem Metallhydridspeicher 15 freigesetzt, wozu diesem Wärme zugeführt werden muss. Die hierfür erforderliche Wärme wird erfindungsgemäß aus dem Wärmespeicher 13 gewonnen. Die Rückwandlung erfolgt in der Brennstoffzelle 17, die nicht nur elektrische Energie abgibt, sondern auch Wärme, die ebenfalls dem Wärmespeicher 13 zugeführt wird.

Insgesamt wird somit ein effizienteres und integriertes Energiespeicher- und -versorgungssystem geschaffen, das die Nutzung der verfügbaren Energieressourcen optimieren, Abwärme zurückgewinnen und nutzen, Wasserstoff als Energieträger einbeziehen und die Gesamtenergieeffizienz von Gebäuden verbessern kann.

## Patentansprüche

1. Energieversorgungssystem für Gebäude, umfassend:
- wenigstens eine elektrische Energiequelle (5,6), die zur Abgabe von elektrischer Energie ausgebildet ist,
- wenigstens eine Wärmequelle (7,8), die zur Abgabe von thermischer Energie ausgebildet ist,
- wenigstens einen elektrischen Verbraucher (11),
- wenigstens einen Wärmeverbraucher (12), und
- ein Energiespeichersystem, dem elektrische Energie von der wenigstens einen elektrischen Energiequelle (5,6) und Wärme von der wenigstens einen Wärmequelle (7,8) zuführbar ist und von dem elektrische Energie an den wenigsten einen elektrischen Verbraucher (11) und Wärme an den wenigstens einen Wärmeverbraucher (12) abgebbar ist,
wobei das Energiespeichersystem einen Wärmespeicher (13), einen elektrischen Energiespeicher (14) und einen Wasserstoffspeicher, insbesondere chemischen Wasserstoffspeicher (15) mit einem Trägerstoff, aufweist, der mit Wasserstoff beladbar und von dem Wasserstoff freisetzbar ist, wobei eine Einrichtung (16) zur Erzeugung von Wasserstoff unter Verwendung von elektrischer Energie aus der wenigstens einen elektrischen Energiequelle (5,6) und/oder dem elektrischen Energiespeicher (14) vorgesehen ist, von welcher der Wasserstoff dem Wasserstoffspeicher (15) zuführbar ist, und wobei eine Einrichtung (17) zur Verbrennung von Wasserstoff unter Abgabe von elektrischer Energie an den elektrischen Speicher (14) und/oder den wenigsten einen elektrischen Verbraucher (11) vorgesehen ist, welcher der aus dem Wasserstoffspeicher (15) freigesetzte Wasserstoff zuführbar ist,
**dadurch gekennzeichnet, dass** Abwärme aus der Einrichtung (16) zur Erzeugung von Wasserstoff und/oder aus der Einrichtung (17) zur Verbrennung von Wasserstoff und/oder aus dem Wasserstoffspeicher (15) dem Wärmespeicher (13) zuführbar ist und dass dem Wasserstoffspeicher (15) zur Freisetzung des Wasserstoffs Wärme aus dem Wärmespeicher (13) zuführbar ist.

2. Energieversorgungssystem nach Anspruch 1, **dadurch gekennzeichnet, dass** die Einrichtung (16) zur Erzeugung von Wasserstoff wenigstens einen Elektrolyseur umfasst.

3. Energieversorgungssystem nach Anspruch 1 oder 2, **dadurch gekennzeichnet, dass** die Einrichtung (17) zur Verbrennung von Wasserstoff wenigstens eine Brennstoffzelle umfasst.

4. Energieversorgungssystem nach einem der Ansprüche 1 bis 3, **dadurch gekennzeichnet, dass** der chemische Wasserstoffspeicher (15) als Metallhydridspeicher oder als Adsorptionsspeicher ausgebildet ist.

5. Energieversorgungssystem nach einem der Ansprüche 1 bis 4, **dadurch gekennzeichnet, dass** der elektrische Energiespeicher (14) als elektrochemischer Speicher, insbesondere als Akkumulator, wie z.B. als Lithium-Ionen- oder Natrium-Ionen-Akkumulator oder Feststoffakkumulator, insbesondere Lithium-Eisenphosphat-Akkumulator ausgebildet ist.

6. Energieversorgungssystem nach einem der Ansprüche 1 bis 5, **dadurch gekennzeichnet, dass** der Wärmespeicher (13) als sensibler Wärmespeicher und/oder Latentwärmespeicher ausgebildet ist.

7. Energieversorgungssystem nach Anspruch 6, **dadurch gekennzeichnet, dass** der sensible Wärmespeicher wenigstens ein Betonelement aufweist, das durch insbesondere mäanderförmig hindurchgeführte Rohrleitungen zur Durchleitung eines flüssigen Wärmeträgermediums, insbesondere Wasser, thermisch aktivierbar ist.

8. Energieversorgungssystem nach Anspruch 7, **dadurch gekennzeichnet, dass** das Betonelement von einer Wärmedämmung umgeben ist.

9. Energieversorgungssystem nach Anspruch 7 oder 8, **dadurch gekennzeichnet, dass** das Betonelement in den Unterbau eines Gebäudes integriert oder im Erdreich angeordnet ist.

10. Energieversorgungssystem nach einem der Ansprüche 1 bis 9, **dadurch gekennzeichnet, dass** die wenigstens eine elektrische Energiequelle photovoltaische Zellen (6) und/oder wenigstens einen Windgenerator umfasst.

11. Energieversorgungssystem nach einem der Ansprüche 1 bis 10, **dadurch gekennzeichnet, dass** die wenigstens eine Wärmequelle eine Biomasseheizung (7) oder ein Biomasseheizkraftwerk umfasst.

12. Energieversorgungssystem nach einem der Ansprüche 1 bis 11, **dadurch gekennzeichnet, dass** das Energieversorgungssystem weiters eine Wärmepumpe (9) umfasst, welche den wenigstens einen Wärmeverbraucher (12) mit Wärme versorgt und die den Wärmespeicher (13) und/oder Grundwasser (8) als Wärmereservoir nutzt.

13. Energieversorgungssystem nach einem der Ansprüche 1 bis 12, **dadurch gekennzeichnet, dass** das Energieversorgungssystem weiters eine Kühlvorrichtung zur Raumkühlung umfasst, welche an eine Wärmesenke, wie z.B. Grundwasser (8), anschließbar ist.

## Claims

1. Energy supply system for buildings, comprising:
- at least one electrical energy source (5,6), which is designed for the delivery of electrical energy,
- at least one heat source (7,8), which is designed for the delivery of thermal energy,
- at least one electrical consumer (11),
- at least one heat consumer (12), and
- an energy storage system, to which electrical energy from the at least one electrical energy source (5,6) and heat from the at least one heat source (7,8) can be supplied and from which electrical energy can be delivered to the at least one electrical consumer (11) and heat can be delivered to the at least one heat consumer (12),
wherein the energy storage system comprises a heat storage (13), an electrical energy storage (14), and a hydrogen storage, in particular a chemical hydrogen storage (15) with a carrier substance, which can be loaded with hydrogen and from which hydrogen can be released, wherein a device (16) for generating hydrogen using electrical energy from the at least one electrical energy source (5,6) and/or the electrical energy storage (14) is provided, from which the hydrogen can be supplied to the hydrogen storage (15), and wherein a device (17) for combusting hydrogen with delivery of electrical energy to the electrical energy storage (14) and/or the at least one electrical consumer (11) is provided, to which the hydrogen released from the hydrogen storage (15) can be supplied, **characterized in that** waste heat from the device (16) for generating hydrogen and/or from the device (17) for combusting hydrogen and/or from the hydrogen storage (15) can be supplied to the heat storage (13) and that heat from the heat storage (13) can be supplied to the hydrogen storage (15) for releasing the hydrogen.

2. Energy supply system according to claim 1, **characterized in that** the device (16) for generating hydrogen comprises at least one electrolyzer.

3. Energy supply system according to claim 1 or 2, **characterized in that** the device (17) for combusting hydrogen comprises at least one fuel cell.

4. Energy supply system according to any one of claims 1 to 3, **characterized in that** the chemical hydrogen storage (15) is designed as a metal hydride storage or as an adsorption storage.

5. Energy supply system according to any one of claims 1 to 4, **characterized in that** the electrical energy storage (14) is designed as an electrochemical storage, in particular as an accumulator, such as, for example, a lithium-ion or sodium-ion accumulator or a solid-state accumulator, in particular a lithium iron phosphate accumulator.

6. Energy supply system according to any one of claims 1 to 5, **characterized in that** the heat storage (13) is designed as a sensible heat storage and/or latent heat storage.

7. Energy supply system according to claim 6, **characterized in that** the sensible heat storage comprises at least one concrete element, which can be thermally activated by pipelines guided through it in particular in a meander-shaped manner for conducting a liquid heat transfer medium, in particular water.

8. Energy supply system according to claim 7, **characterized in that** the concrete element is surrounded by thermal insulation.

9. Energy supply system according to claim 7 or 8, **characterized in that** the concrete element is integrated into the substructure of a building or arranged in the ground.

10. Energy supply system according to any one of claims 1 to 9, **characterized in that** the at least one electrical energy source comprises photovoltaic cells (6) and/or at least one wind generator.

11. Energy supply system according to any one of claims 1 to 10, **characterized in that** the at least one heat source comprises a biomass heating system (7) or a biomass power plant.

12. Energy supply system according to any one of claims 1 to 11, **characterized in that** the energy supply system further comprises a heat pump (9), which supplies the at least one heat consumer (12) with heat and which uses the heat storage (13) and/or groundwater (8) as a heat reservoir.

13. Energy supply system according to any one of claims 1 to 12, **characterized in that** the energy supply system further comprises a cooling device for space cooling, which can be connected to a heat sink, such as, for example, groundwater (8).

## Revendications

1. Système d'approvisionnement énergétique pour bâtiments, comprenant:
- au moins une source d'énergie électrique (5, 6) configurée pour fournir de l'énergie électrique,
- au moins une source de chaleur (7, 8) configurée pour fournir de l'énergie thermique,
- au moins un consommateur électrique (11),
- au moins un consommateur thermique (12), et
- un système de stockage d'énergie auquel l'énergie électrique de ladite au moins une source d'énergie électrique (5, 6) et la chaleur de ladite au moins une source de chaleur (7, 8) peuvent être fournies et duquel l'énergie électrique peut être distribuée audit au moins un consommateur électrique (11) et la chaleur peut être distribuée audit au moins un consommateur thermique (12),
ledit système de stockage d'énergie comprenant un accumulateur thermique (13), un accumulateur d'énergie électrique (14) et un réservoir d'hydrogène, en particulier un réservoir d'hydrogène chimique (15) avec un matériau porteur, qui peut être chargé d'hydrogène et duquel l'hydrogène peut être libéré, un dispositif (16) étant prévu pour la production d'hydrogène en utilisant de l'énergie électrique provenant de ladite au moins une source d'énergie électrique (5, 6) et/ou de l'accumulateur d'énergie électrique (14), à partir duquel l'hydrogène peut être fourni au réservoir d'hydrogène (15), et un dispositif (17) étant prévu pour la combustion d'hydrogène avec distribution d'énergie électrique à l'accumulateur électrique (14) et/ou audit au moins un consommateur électrique (11), auquel l'hydrogène libéré du réservoir d'hydrogène (15) peut être fourni, **caractérisé en ce que** la chaleur résiduelle du dispositif (16) pour la production d'hydrogène et/ou du dispositif (17) pour la combustion d'hydrogène et/ou du réservoir d'hydrogène (15) peut être fournie à l'accumulateur thermique (13) et **en ce que** la chaleur de l'accumulateur thermique (13) peut être fournie au réservoir d'hydrogène (15) pour la libération de l'hydrogène.

2. Système d'approvisionnement énergétique selon la revendication 1, **caractérisé en ce que** le dispositif (16) pour la production d'hydrogène comprend au moins un électrolyseur.

3. Système d'approvisionnement énergétique selon la revendication 1 ou 2, **caractérisé en ce que** le dispositif (17) pour la combustion d'hydrogène comprend au moins une pile à combustible.

4. Système d'approvisionnement énergétique selon l'une des revendications 1 à 3, **caractérisé en ce que** le réservoir d'hydrogène chimique (15) est conçu comme un réservoir d'hydrure métallique ou comme un réservoir à adsorption.

5. Système d'approvisionnement énergétique selon l'une des revendications 1 à 4, **caractérisé en ce que** l'accumulateur d'énergie électrique (14) est conçu comme un accumulateur électrochimique, en particulier comme un accumulateur, tel qu'un accumulateur lithium-ion ou sodium-ion ou un accumulateur à l'état solide, en particulier un accumulateur lithium-fer-phosphate.

6. Système d'approvisionnement énergétique selon l'une des revendications 1 à 5, **caractérisé en ce que** l'accumulateur thermique (13) est conçu comme un accumulateur de chaleur sensible et/ou un accumulateur de chaleur latente.

7. Système d'approvisionnement énergétique selon la revendication 6, **caractérisé en ce que** l'accumulateur de chaleur sensible comprend au moins un élément en béton qui peut être activé thermiquement par des conduites, notamment en forme de méandres, pour la circulation d'un fluide caloporteur liquide, notamment de l'eau.

8. Système d'approvisionnement énergétique selon la revendication 7, **caractérisé en ce que** l'élément en béton est entouré d'une isolation thermique.

9. Système d'approvisionnement énergétique selon la revendication 7 ou 8, **caractérisé en ce que** l'élément en béton est intégré dans la fondation d'un bâtiment ou disposé dans le sol.

10. Système d'approvisionnement énergétique selon l'une des revendications 1 à 9, **caractérisé en ce que** ladite au moins une source d'énergie électrique comprend des cellules photovoltaïques (6) et/ou au moins un générateur éolien.

11. Système d'approvisionnement énergétique selon l'une des revendications 1 à 10, **caractérisé en ce que** ladite au moins une source de chaleur comprend un chauffage à biomasse (7) ou une centrale de cogénération à biomasse.

12. Système d'approvisionnement énergétique selon l'une des revendications 1 à 11, **caractérisé en ce que** le système d'approvisionnement énergétique comprend en outre une pompe à chaleur (9) qui alimente ledit au moins un consommateur thermique (12) en chaleur et qui utilise l'accumulateur thermique (13) et/ou les eaux souterraines (8) comme réservoir de chaleur.

13. Système d'approvisionnement énergétique selon l'une des revendications 1 à 12, **caractérisé en ce que** le système d'approvisionnement énergétique comprend en outre un dispositif de refroidissement pour le refroidissement de locaux, qui peut être raccordé à un dissipateur thermique, tel que les eaux souterraines (8).
